(19) Europäisches Patentamt
European Patent Office
Office européen des brevets

(11) Publication number: 0 356 853 A2

(12) # EUROPEAN PATENT APPLICATION

(21) Application number: 89115345.4

(51) Int. Cl.5: C08L 63/00 , C08L 23/08 , C09D 163/00 , C09D 123/08

(22) Date of filing: 19.08.89

(30) Priority: 29.08.88 US 238029

(43) Date of publication of application: 07.03.90 Bulletin 90/10

(84) Designated Contracting States: AT BE CH DE ES FR GB IT LI NL SE

(71) Applicant: THE DOW CHEMICAL COMPANY
Office of Patent Counsel P.O. Box 1967
Midland Michigan 48640(US)

(72) Inventor: Sanford, Joe F.
604 Dogwood
Lake Jackson Texas 77566(US)
Inventor: Hart, Jeffery L.
105 Anyway No.812
Lake Jackson Texas 77566(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) Homogeneous mixture of epoxy resin and carboxyl-containing olefin polymer.

(57) A composition useful in the preparation of low gloss coatings is disclosed which consists essentially of an unreacted, homogeneous mixture of (A) one or more epoxy resins having an average of more than one vicinal epoxy group per molecule and (B) one or more polymers resulting from polymerizing (1) one or more α-olefins, (2) one or more polymerizable ethylenically unsaturated acids and (3) optionally one or more polymerizable ethylenically unsaturated monomers other than (1) or (2).

EP 0 356 853 A2

## HOMOGENEOUS MIXTURE OF EPOXY RESIN AND CARBOXYL-CONTAINING OLEFIN POLYMER

The present invention concerns an epoxy resin composition comprising an epoxy resin and a polymer of one or more α-olefins and a polymerizable ethylenically unsaturated acid.

Cured epoxy resin coatings usually have high gloss properties. For some applications, it is desirable to have cured coatings which have a low gloss. The present invention provides a composition which when admixed with a curing agent and fillers as appropriate and cured results in a product having relatively low gloss.

The present invention pertains to a solid composition consisting essentially of a homogeneous mixture of (A) one or more epoxy resins having an average of more than one vicinal epoxy group per molecule and (B) one or more polymers resulting from polymerizing (1) one or more α-olefins, (2) one or more polymerizable ethylenically unsaturated acids and (3) optionally one or more polymerizable ethylenically unsaturated monomers other than (1) or (2); wherein components (A) and (B) are present in an amount which provides from 50 to 95 percent by weight of component (A) and from 50 to 5 percent by weight of component (B); component (B-1) is present in an amount of from 95 to 65 percent by weight of the combined weight of components (B-1), (B-2) and (B-3); component (B-2) is present in an amount of from 5 to 35 percent by weight of the combined weight of components (B-1), (B-2) and (B-3); and component (B-3) is present in an amount of from zero to 10 percent by weight of the combined weight of components (B-1), (B-2) and (B-3) and wherein not more than 55 percent of the carboxyl groups contained in component (B) has been reacted with component (A).

The mixture of the epoxy resin and carboxyl-containing polymer of the present invention is prepared by blending at a suitable temperature and time such that the mixture does not result in a substantial drop in epoxide content. This can be accomplished by melt mixing by any suitable means, for example, on a multi-roll mill, in an extruder or a stirred vessel, at temperatures suitably from 50°C to 150°C, more suitably from 60°C to 100°C, most suitably from 70°C to 90°C for a time suitably from 0.1 minute to 10 minutes, more suitably from 0.2 minute to 2 minutes, most suitably from 0.3 minute to 1 minute.

The homogeneous mixture of the present invention suitably consists of from 50 to 95, more suitably from 84 to 92, percent by weight of the epoxy portion of the composition and suitably from 50 to 5, more suitably from 16 to 8, percent by weight of the carboxyl-containing polymer portion of the composition.

In the homogeneous mixture of the present invention, suitably not more than 55, more suitably less than 14, most suitably less than 5, percent of the carboxyl groups contained in the carboxyl-containing polymer component of the composition has been reacted with the epoxy resin component of the composition.

The carboxyl-containing polymer suitably contains from 65 to 95, more suitably from 65 to 85, most suitably from 75 to 80, percent by weight of one or more α-olefins based upon the combined weight of α-olefin(s), polymerizable ethylenically unsaturated carboxyl-containing monomer(s) and other polymerizable ethylenically unsaturated monomer(s).

The carboxyl-containing polymer suitably contains from 5 to 35, more suitably from 15 to 35, most suitably from 20 to 25, percent by weight of one or more polymerizable ethylenically unsaturated carboxyl-containing monomers based upon the combined weight of α-olefin(s), polymerizable ethylenically unsaturated carboxyl-containing monomer and other polymerizable ethylenically unsaturated monomer.

The carboxyl-containing polymer suitably contains from zero to 10, more suitably from zero to 5, most suitably from zero to 2, percent by weight of one or more other polymerizable ethylenically unsaturated monomers based upon the combined weight of α-olefin(s), polymerizable ethylenically unsaturated carboxyl-containing monomer and other polymerizable ethylenically unsaturated monomer.

Suitable α-olefins which can be polymerized with the other monomers to form the carboxyl-containing polymer include, for example, those α-olefins having from 2 to 18, more suitably from 2 to 12, most suitably from 2 to 8 carbon atoms or any combination thereof. Particularly suitable α-olefins include, ethylene, propylene, butene-1, pentene-1, 3-methylbutene-1, 4-methylpentene-1, hexene-1, octene-1 and combinations thereof. Particularly suitable is ethylene.

Suitable carboxyl-containing monomers which can be employed herein include any polymerizable ethylenically unsaturated monocarboxylic acid, particularly those having from 3 to 4 carbon atoms. Also suitable are the monoalkyl, monocycloakyl or monoaromatic esters of such polymerizable ethylenically unsaturated monocarboxylic acids. Particularly suitable such carboxyl-containing monomers include, for example, acrylic acid, methacrylic acid, crotonic acid and combinations thereof. Suitable esters of monocarboxylic acids which can be employed herein include, for example, those esters which contain from 4 to 12 carbon atoms.

Suitable monomers which can optionally be copolymerized with the α-olefin(s) and carboxyl-containing

monomer(s) include, for example, alkyl, cycloalkyl and aromatic esters of polymerizable ethylenically unsaturated monocarboxylic acids; aromatic substituted alkenes; halo or alkyl substituted aromatic substituted alkenes, for example, styrene, α-methyl styrene, chlorostyrene, vinyl toluene; and combinations thereof. Particularly suitable such esters include, for example, methyl acrylate, methyl methyacrylate, ethyl acrylate, ethyl methacrylate, propyl acrylate, propyl methacrylate, butylacrylate , butyl metyhacrylate, pentyl acrylate, pentyl methacrylate, hexyl acrylate, hexyl methacrylate, heptyl acrylate, heptyl methacrylate, octyl acrylate, octyl methacrylate, 2-ethylhexyl acrylate, 2-ethylhexyl methacrylate, nonyl acrylate, nonyl methacrylate, decyl acrylate, decyl methacrylate and combinations thereof. Most particularly suitable are those $C_1$ to $C_8$ alkyl esters of acrylic or methacrylic acid.

If desired, the polymer can also contain minor amounts, suitably up to 10, more suitably up to 5, most suitably up to 2, percent by weight of a polymerizable polyunsaturated compound, for example, divinyl benzene.

These polymers can be prepared by the polymerization of a mixture of the monomers in the presence of Ziegler-Natta catalysts. Particularly suitable polymers and a method for their preparation can be found in US Patents 4,599,392 issued to McKinney et al.; 4,351,931 issued to Armitage; and 3,520,861 issued to Thomson et al.

Suitable epoxy resins which can be employed herein include the aromatic or aliphatic based epoxy resins. Particularly suitable are the glycidyl ethers of aliphatic polyhydroxyl-containing compounds, and glycidyl ethers of aromatic polyhydroxyl-containing compounds, with the glycidyl ethers of the aromatic polyhydroxyl-containing compounds being most preferred. These glycidyl ethers include, for example, the diglycidyl ethers of aliphatic diols and polyoxyalkylene diols, aromatic diols, bisphenols, phenol or substituted phenol-aldehyde novolac resins, phenol or substituted phenol cycloalkadiene or oligomers of cycloalkadiene resins and combinations thereof.

Particularly suitable glycidyl ethers of aliphatic polyhydroxyl-containing compounds include, for example, those represented by the following general formulas I or II or a combination thereof

Formula I

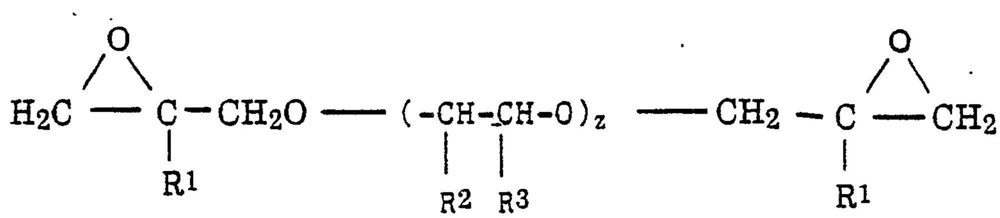

Formula II

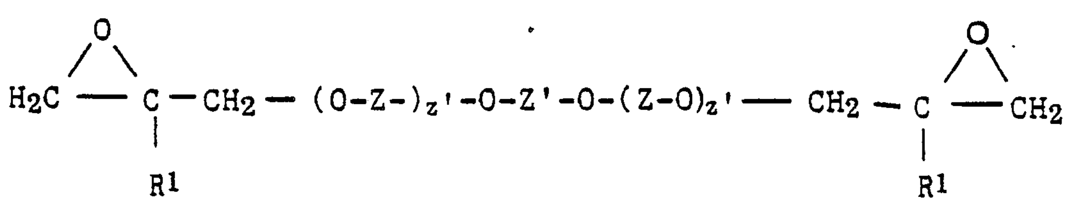

wherein z has a value suitably from 1 to 14, more suitably from 2 to 7; each z′ independently has a value suitably from zero to 4, more suitably from 1 to 4, most suitably from 1 to 2; each $R^1$ group is independently a hydrogen or an alkyl group having from 1 to 4 carbon atoms; each Z is independently a $-CHR^2-CHR^3-$ group where each $R^2$ and $R^3$ group is hydrogen or an alkyl or substituted alkyl group having from 1 to 4 carbon atoms; and Z′ represents such divalent groups as those represented by the following formulas A, B, C, D, E, F, G, H or I:

FORMULA A

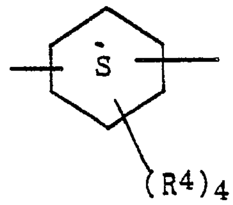

,

FORMULA B

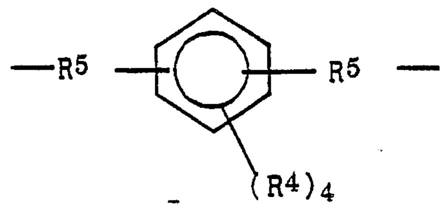

,

FORMULA C

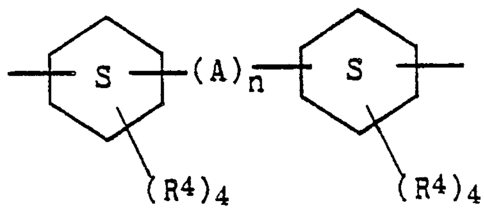

,

FORMULA D

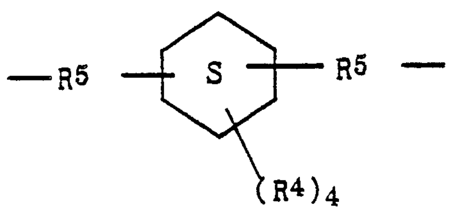

,

FORMULA E

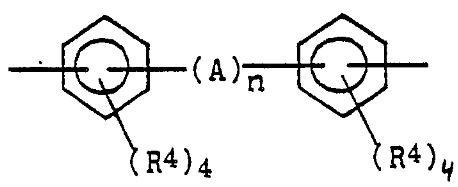

,

FORMULA F

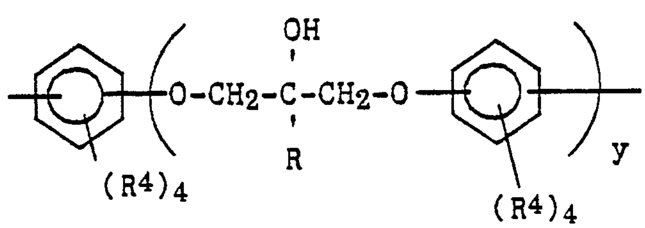

,

FORMULA G

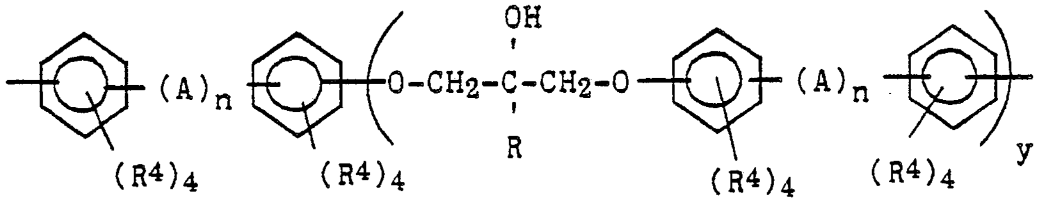

,

FORMULA H

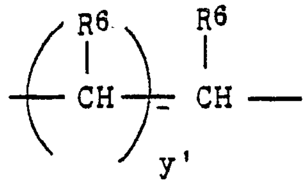

or

FORMULA I

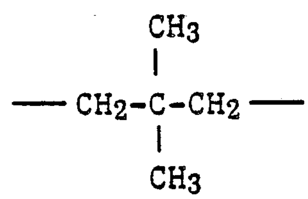

wherein each A is independently a divalent hydrocarbyl group having suitably from 1 to 12, more suitably from 1 to 6, most suitably from 1 to 4, carbon atoms, -S-, -S-S-, -SO-, $-SO_2-$, -CO- or -O-; each R is independently hydrogen or an alkyl group having from 1 to 4 carbon atoms; each $R^4$ is independently hydrogen or a hydrocarbyl group having suitably from 1 to 12, more suitably from 1 to 6, most suitably from 1 to 4, carbon atoms; each $R^5$ is independently a divalent hydrocarbon group having from 1 to 6 carbon atoms; each $R^6$ is independently hydrogen or an alkyl group having from 1 to 6 carbon atoms; n has a value of zero or 1; y has an average value suitably from zero to 0.5, more suitably from 0.01 to 0.1; and $y'$ has a value suitably from 1 to 19, more suitably from 3 to 10, most suitably 5.

Particularly suitable glycidyl ethers of aromatic polyhydroxyl-containing compounds include, for example, those represented by the following general formulas III-VI or a combination thereof

FORMULA III

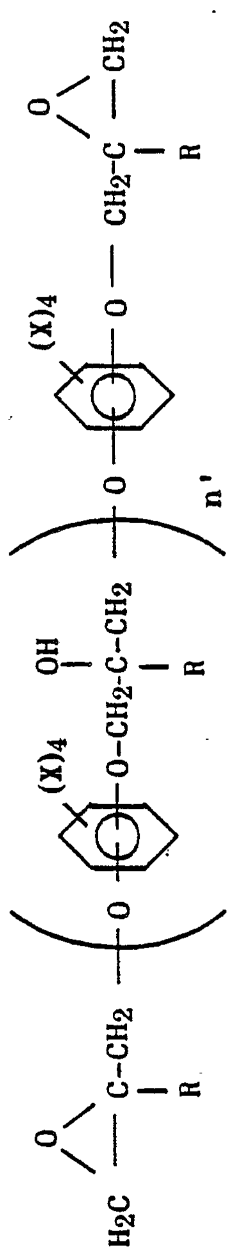

FORMULA IV

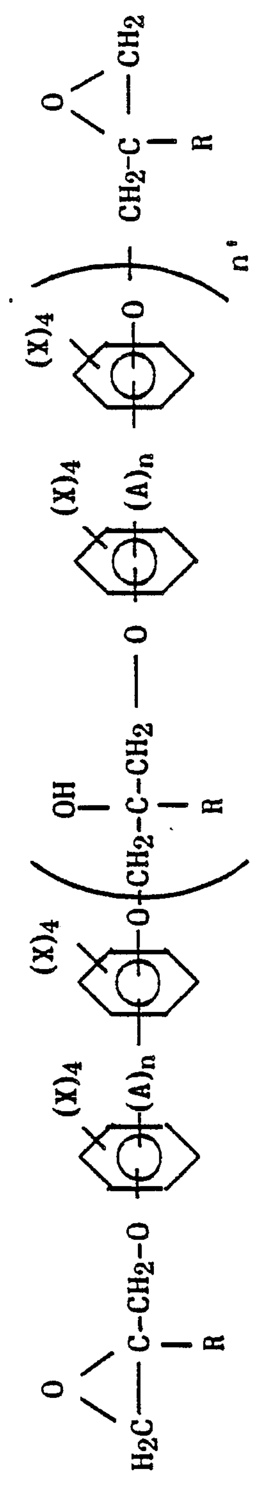

FORMULA V

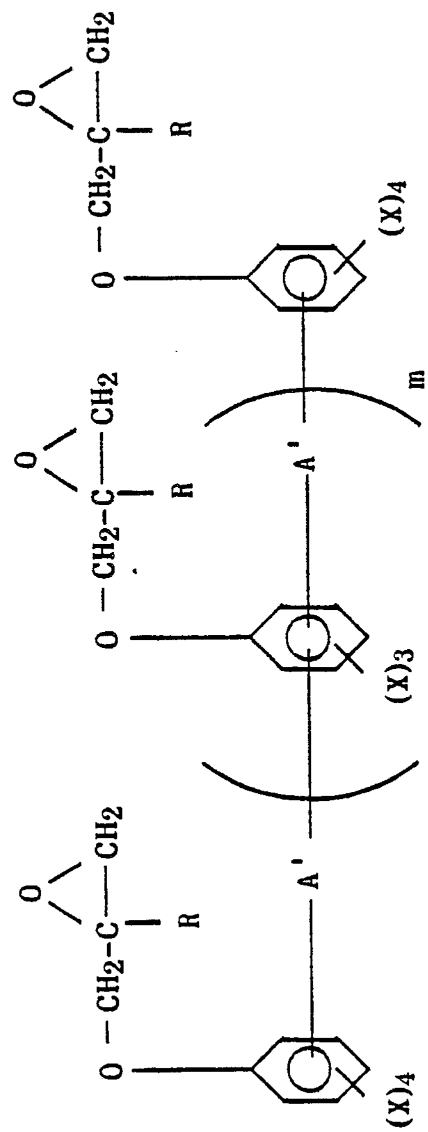

FORMULA VI

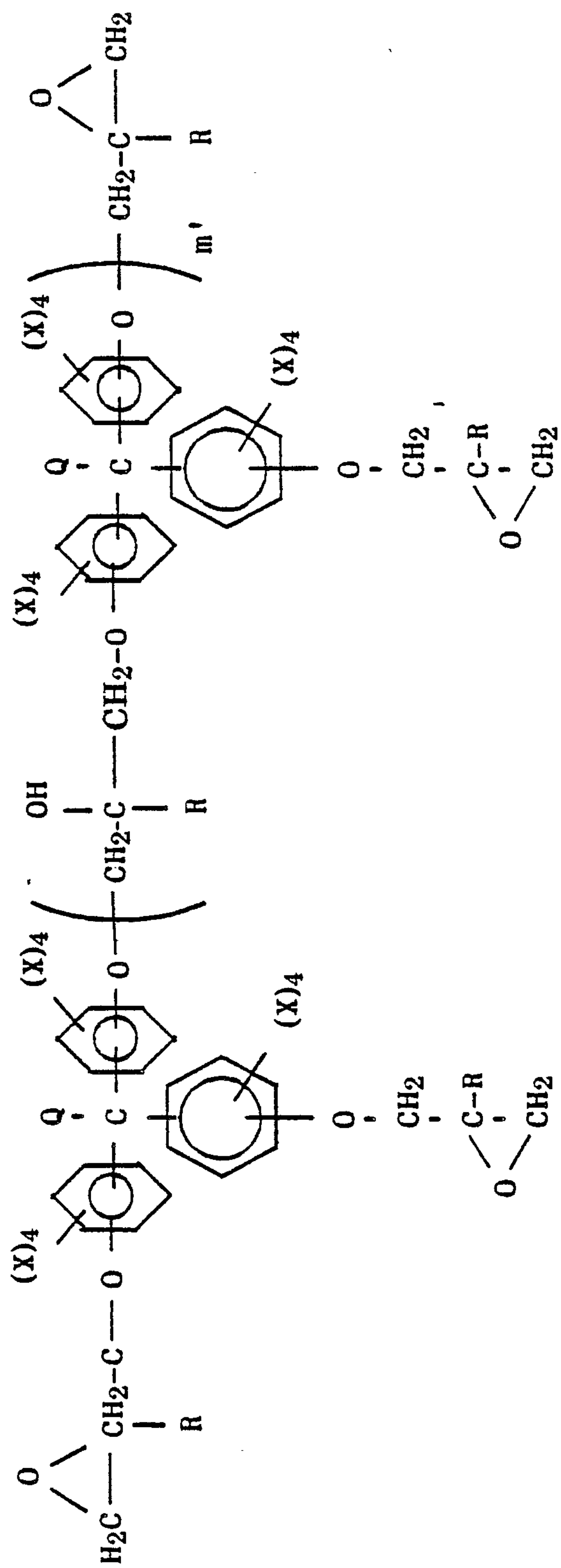

wherein each A is independently a divalent hydrocarbyl group having suitably from 1 to 12, more suitably from 1 to 6, most suitably from 1 to 4, carbon atoms; each A′ is independently a divalent hydrocarbyl group having from 1 to 10, more suitably from 1 to 4, most suitably from 1 to 2, carbon atoms; each Q is independently hydrogen or an alkyl group having from 1 to 4 carbon atoms; each R is independently hydrogen or an alkyl group having from 1 to 3 carbon atoms; each X is independently hydrogen, a hydrocarbyl or hydrocarbyloxy group having suitably from 1 to 12, more suitably from 1 to 6, most suitably

from 1 to 4, carbon atoms or a halogen atom, preferably chlorine or bromine; m has a value suitably from 0.01 to 8, more suitably from 2 to 6, most suitably from 2 to 4; n has a value of zero or 1; and n′ has an average value suitably from 2 to 6, more suitably from 2.4 to 4.7, most suitably from 2.9 to 3.8.

Suitable glycidyl ethers of phenol or substituted phenol cycloalkadiene or oligomers of cycloalkadiene resins include, for example, those represented by the following general formula VII

FORMULA VII

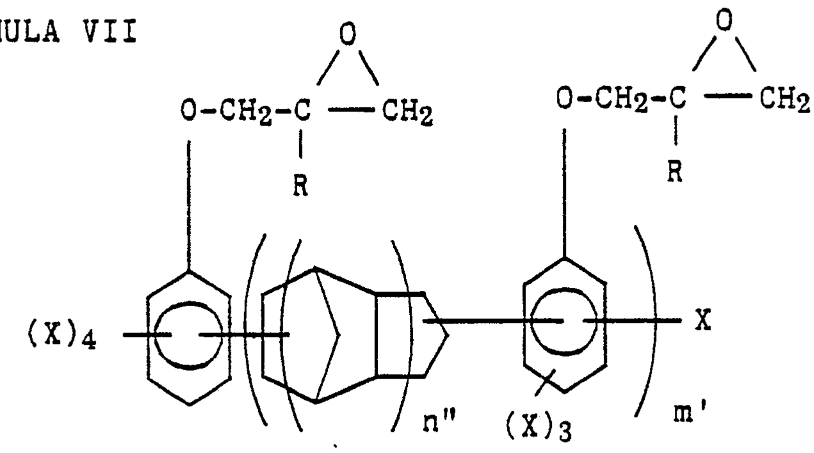

wherein each R is independently hydrogen or an alkyl group having from 1 to 3 carbon atoms; each X is independently hydrogen, a hydrocarbyl or hydrocarbyloxy group having suitably from 1 to 12, more suitably from 1 to 6, most suitably from 1 to 4, carbon atoms or a halogen atom, preferably chlorine or bromine; m′ has a value suitably from 1 to 4, more suitably from 1 to 3, most suitably from 2 to 3; and n″ has a value suitably from zero to 3, more suitably from 1 to 3, most suitably from 1 to 2.

The term hydrocarbyl as employed herein means any aliphatic, cycloaliphatic, aromatic, aryl substituted aliphatic or cycloaliphatic, or aliphatic or cycloaliphatic substituted aromatic groups. Likewise, the term hydrocarbyloxy means a hydrocarbyl group having an oxygen linkage between it and the object to which it is attached. The term divalent hydrocarbyl group refers to the aforementioned hydrocarbyl groups minus an additional hydrogen atom.

The compositions of the present invention can be employed to prepare low gloss powder coatings.

The compositions of the present invention can be cured with a curing quantity of a suitable curing agent for epoxy resins, for example, substituted guanidines such as, dicyandiamide, derivatives of biguanides such as, o-toluyl-biguanide, aliphatic amines such as, ethylene diamine, diethylenetriamine, triethylenetetramine, and tetraethylenepentamine; aromatic amines such as ethylene dianiline, metaphenylene diamine, and diaminodiphenylsulfone; phenolic hydroxyl-containing compounds, polycarboxyic acids, and mixtures thereof.

Also suitable as curing agents include, for example, halogenated anhydrides such as chlorendic anhydride and non-halogenated anhydrides such as pyromellitic dianhydride and tetra- or hexahydrophthalic anhydride.

Suitable curing agents containing more than one phenolic hydroxyl group per molecule which can be employed herein include, for example, catechol, hydroquinone, resorcinol, bi(hydroxyphenyl), bisphenol A, bisphenol F, bisphenol K, bisphenol S, phenol and alkyl or halogenated substituted phenol aldehyde resins, phenol or alkyl or halogen substituted cycloalkadiene or oligomers of cycloalkadiene resins, aromatic hydroxyl terminated adducts of epoxy resins and bisphenols and combinations thereof.

When the curing agent is a phenolic hydroxyl-containing compound, it may be desirable to include a catalyst or an accelerator to promote the reaction between the epoxy resin and the phenolic hydroxyl groups. Suitable catalysts include those disclosed in U.S. Patent Nos. 3,931,109, 3,948,855 and 3,477,990. Particularly suitable catalysts or accelerators are 2-methylimidazole or triphenylphosphine.

Powder coatings prepared from the present invention can also include other components, for example, flow control agents, pigments, dyes and fillers.

Example 1 Solid Epoxy Resin Plus 12 Weight Percent Copolymer; 0 Percent Conversion of the Carboxyl Groups of the Copolymer by the Epoxy Resin.

A. Preparation of Solid Advanced Epoxy Resin and Blending with Ethylene/Acrylic Acid Copolymer

A diglycidyl ether of bisphenol A having an epoxide equivalent weight (EEW) of 181 (800 g, 4.42 epoxide equivalents) was pre-weighed into a two-liter, 5-neck, round bottom glass reaction flask equipped with a thermometer, Thermowatch temperature controller, stainless steel stirrer, nitrogen purge, heating mantle, and air blower. At a temperature of 60°C, bisphenol A (264 g, 2.32 phenolic hydroxyl equivalents) was charged. At a temperature of 72°C, when the bisphenol A was uniformly mixed in, ethyltriphenylphosphonium acetate-acetic acid complex catalyst (0.80 g of 70 percent solution in methanol) was charged. The heater control was then set such that the heat-up rate was 1.6°C/minute before the exotherm occurred. The heat was turned off when the temperature reached 150°C, and the reaction was allowed to exotherm to a maximum temperature of 180°C. Following the advancement reaction, the temperature was allowed to drop to 174°C during a 28 minute post reaction cook. Following the post reaction period, the heat was turned off, and an ethylene/acrylic acid copolymer (EAA) containing 20 weight percent acrylic acid and having a melt index of 1300 (145.2 g, 0.40 equivalent of acid) was charged with strong stirring. Nine minutes after the start of the EAA polymer addition, the product was drained onto aluminum foil and flaked when cool. The advanced epoxy resin prior to mixing with the EAA copolymer had an epoxide equivalent weight of 503 (8.55 percent epoxide). After mixing the advanced epoxy resin with the EAA copolymer, the mixture had an epoxide equivalent weight of 573 (7.50 percent epoxide). The theoretical percent epoxide of the mixture assuming no reaction between the advanced epoxy resin and the acid contained in the copolymer is 7.52. Essentially none of the acrylic acid had been reacted with the epoxy resin.

B. Preparation of Powder Coating

A powder coating was prepared by weighing into a plastic bag and dry blending the components of the coating therein. After blending in the plastic bag, the blended components were extruded in a Buss Condux PLK-46 screw extruder equipped with a 46 mm diameter kneader screw operated at 120 rpm with zone temperatures set at 60°C and 90°C. The molten extrudate was passed through BCI Chill Rolls, 6.5 in. (165.1 mm) diameter, cooled and crushed. The crushed extrudate was then finely ground in a Brinkman Centrifugal Grinding Mill using a 12 tooth grinding wheel and a 0.75 micron screen. The finely ground extrudate was sieved through No. 140 (150 mesh) standard test sieves (wire cloth). The 150 mesh powder coating formulation was applied via electrostatic spray with a Gema Ag Type 710 Laboratory Unit, set at 60-70 kv, onto 4 in. x 12 in. x 20 gauge (101.6 mm x 304.8 mm x 0.9 mm) clean treatment, cold rolled steel Parker test panels. The electrostatically coated panels were cured at 180°C for 15-20 minutes in a Blue M Touchmatic convection oven. After removal from the oven, the panels were cooled and the coating properties evaluated. The results are given in Table I.

The components of the powder coating composition were as follows:

| | |
|---|---|
| 92.40 g | (92.4 weight percent) epoxy resin-EAA blend from A above; |
| 37.2 g | (3.72 weight percent) of EPONTMP-108 accelerated dicyandiamide type hardener available from Shell Chemical Co.; |
| 14.9 g | (1.49 weight percent) of ACRYLONTMMFP polyacrylate type flow modifier available from Synthron, Inc.; |
| 18.6 g | (1.86 weight percent) of carbon black pigment. |

The resultant coating had a 60° gloss value of 8 percent reflectance as determined by ASTM D 523-85.

Comparative Experiment A Solid Epoxy Resin Plus 12 Weight Percent Copolymer; 100 Percent Conversion of the Carboxyl Groups of the Copolymer by the Epoxy Resin.

A. Preparation of Solid Advanced Epoxy Resin and Blending with Ethylene/Acrylic Acid Copolymer

A diglycidyl ether of bisphenol A having an EEW of 181 (800 g, 4.42 epoxide equivalents) and

bisphenol A (264.0 g, 2.32 phenolic hydroxyl equivalents) were pre-weighed into a two-liter, 5-neck, round bottom glass reaction flask equipped with a thermometer, Thermowatch temperature controller, stainless steel stirrer, nitrogen purge, heating mantle, and air blower. At a temperature of 77° C, when the bisphenol A was uniformly mixed in, ethyltriphenylphosphonium acetate•acetic acid complex catalyst (0.80 g of a 70 percent solution in methanol) was charged. The heater control was then set such that the heat-up rate was 1.6° C/minute before the exotherm occurred (i.e., in the range between 95 to 106° C). The heat was turned off when the temperature reached 150° C, and the reaction was allowed to exotherm to a maximum temperature of 190° C. Following the advancement reaction, the temperature was allowed to drop to 173° C during a 22-minute post reaction cook. Following the post reaction period, the heat was turned off, and an ethylene/acrylic acid copolymer (EAA) containing 20 percent acrylic acid by weight and having a melt index of 1300 (145.2 g, 0.40 acid equivalent) was charged with strong stirring. Four minutes after the start of the EAA addition, 0.3 g of tris(dimethylaminomethyl)phenol (DMP 30) catalyst was charged. The temperature was controlled at 150° C for an additional 56 minutes, at which time the product was drained onto aluminum foil and flaked when cool. The advanced epoxy resin prior to mixing with the EAA copolymer had an epoxide equivalent weight of 495 (8.69 percent epoxide). After mixing the advanced epoxy resin with the EAA copolymer, the mixture had an epoxide equivalent weight of 714 (6.02 percent epoxide). The theoretical percent epoxide of the mixture assuming 100 percent reaction between the advanced epoxy resin and the acid contained in the copolymer is 6.22. Essentially 100 percent of the carboxyl groups contained in the copolymer had been reacted with the epoxy resin.

B. Preparation of Powder Coating

Employing the Procedure of Example 1-A above, the following components were blended.

| | |
|---|---|
| 924 g | (92.4 weight percent) epoxy resin-EAA blend from A above; |
| 37.2 g | (3.72 weight percent) of EPONTMP-108 accelerated dicyandiamide type hardener available from Shell Chemical Co.; |
| 14.9 g | (1.49 weight percent) of ACRYLONTMMFP polyacrylate type flow modifier available from Synthron, Inc.; |
| 18.6 g | (1.86 weight percent) of carbon black pigment. |

The resultant coating had a 60° gloss value of 77 percent reflectance as determined by ASTM D 523-85.

Example 2 Solid Epoxy Resin Plus 12 Weight Percent Copolymer; 14 Percent Conversion of the Carboxyl Groups of the Copolymer by the Epoxy Resin.

A. Preparation of Solid Advanced Epoxy Resin and Blending with Ethylene/Acrylic Acid Copolymer

A diglycidyl ether of bisphenol A having an EEW of 181 (1000 g, 5.52 epoxide equivalents) and bisphenol A (330 g, 2.89 phenolic hydroxyl equivalents) were pre-weighed into a two-liter, 5-neck, round bottom glass reaction flask equipped with a thermometer, Thermowatch temperature controller, stainless steel stirrer, nitrogen purge, heating mantle, and air blower. At a temperature of 72° C, when the bisphenol A was uniformly mixed in, ethyltriphenylphosphonium acetate•acetic acid complex catalyst (1.0 g of a 70 percent solution in methanol) was charged. The heater control was then set such that the heat-up rate was 1.0° C/minute before the exotherm occurred (i.e., in the range between 92 to 102° C). The heat was turned off when the temperature reached 150° C, and the reaction was allowed to exotherm to a maximum temperature of 182° C. Following the advancement reaction, the temperature was allowed to drop to 172° C during a 30 minute post reaction cook. Following the post reaction period, the heat was turned off, and an ethylene/acrylic acid copolymer (EAA) containing 20 percent acrylic acid by weight and having a melt index of 1300 (181.5 g, 0.50 acid equivalent) was charged with strong stirring. The temperature was controlled at 150° C for an additional 30 minutes, at which time the product was drained onto aluminum foil and flaked

when cool. After mixing the advanced epoxy resin with the EAA copolymer, the mixture had an epoxide equivalent weight of 592 (7.26 percent epoxide). The theoretical percent epoxide of the mixture assuming no reaction between the advanced epoxy resin and the acid contained in the copolymer is 7.54. About 14 percent of the carboxyl groups had been reacted with the epoxy resin.

B. Preparation of Powder Coating

Employing the Procedure of Example 1-A above, the following components were blended.

| | |
|---|---|
| 924 g | (92.4 weight percent) epoxy resin-EAA blend from A above; |
| 39.2 g | (3.72 weight percent) of EPONTMP-108 accelerated dicyandiamide type hardener available from Shell Chemical Co.; |
| 14.9 g | (1.49 weight percent) of ACRYLONTMMFP polyacrylate type flow modifier available from Synthron, Inc.; |
| 18.6 g | (1.86 weight percent) of carbon black pigment. |

The resultant coating had a 60° gloss value of 43 percent reflectance as determined by ASTM D 523-85.

Example 3 Solid Epoxy Resin Plus 8 Weight Percent Copolymer; 0 Percent Conversion of the Carboxyl Groups of the Copolymer by the Epoxy Resin.

A. Preparation of Solid Advanced Epoxy Resin and Blending with Ethylene/Acrylic Acid Copolymer

A diglycidyl ether of bisphenol A having an EEW of 181 (2500 g, 13.8 epoxide equivalents) was pre-weighed into a five-liter, 5-neck, round bottom glass reaction flask equipped with a thermometer, Thermowatch temperature controller, stainless steel stirrer, nitrogen purge, heating mantle, and air blower. With stirring, the resin was heated to 90°C, at which time bisphenol A (889.9 g, 7.81 phenolic hydroxyl equivalents) was charged. At a temperature of 80°C, when the bisphenol A was uniformly mixed in, ethyltriphenyl-phosphonium acetate•acetic acid complex catalyst (2.86 g of a 70 percent solution in methanol) was charged. The heater control was then set such that the heat-up rate was 0.77°C/minute before the exotherm occurred (i.e., in the range between 90 to 113°C). The heat was turned off when the temperature reached 150°C, and the reaction was allowed to exotherm to a maximum temperature of 191°C. Following the advancement reaction, the temperature was allowed to drop to 175°C during a 66-minute post reaction cook. Following the post reaction period, the heat was turned off, and an ethylene/acrylic acid copolymer (EAA) containing 20 percent acrylic acid by weight and having a melt index of 1300 (295 g, 0.819 acid equivalent) was charged with strong stirring. The temperature was allowed to drop to approximately 156°C. Ten minutes after the start of the EAA polymer addition, the product was drained onto aluminum foil and flaked when cool. After mixing the advanced epoxy resin with the EAA copolymer, the mixture had an epoxide equivalent weight of 611 (7.04 percent epoxide). The theoretical percent epoxide of the mixture assuming no reaction between the advanced epoxy resin and the acid contained in the copolymer is 7.00. Essentially zero percent of the carboxyl groups contained in the copolymer had been reacted with the epoxy resin.

B. Preparation of Powder Coating

Employing the Procedure of Example 1-A above, the following components were blended.

| | |
|---|---|
| 761.5 g | (76.15 weight percent) epoxy resin-EAA blend from A above; |
| 30.5 g | (3.05 weight percent) of EPONTMP-108 accelerated dicyandiamide type hardener available from Shell Chemical Co.; |
| 8.0 g | (0.8 weight percent) of ACRYLONTMMFP polyacrylate type flow modifier available from Synthron, Inc.; |
| 200.0 g | (20 weight percent) $TiO_2$ filler; |

The resultant coating had a 60° gloss value of 6 percent reflectance as determined by ASTM D 523-85.

Example 4 Solid Epoxy Resin plus 12 Weight percent Copolymer; 0 Percent Conversion of the Carboxyl Groups of the Copolymer by the Epoxy Resin.

A. Preparation of Solid Advanced Epoxy Resin and Blending With Ethylene/Acrylic Acid Copolymer

A diglycidyl ether of bisphenol A having an EEW of 181 (2000 g, 11.0 epoxide equivalents) and bisphenol A (659.9 g, 5.79 phenolic hydroxyl equivalents) were pre-weighed into a five-liter, 5-neck, round bottom glass reaction flask equipped with a thermometer, Thermowatch temperature controller, stainless steel stirrer, nitrogen purge, heating mantle, and air blower. At a temperature of 75° C, when the bisphenol A was uniformly mixed in, ethyltriphenylphosphonium acetate•acetic acid complex catalyst (2.0 g of a 70 percent solution in methanol) was charged. The heater control was then set such that the heat-up rate was 1.3° C/minute before the exotherm occurred (i.e., in the range between 90-103° C). The heat was turned off when the temperature reached 150° C, and the reaction was allowed to exotherm to a maximum temperature of 198° C. Following the advancement reaction, the temperature was allowed to drop to 172° C during a 21-minute post reaction cook. Following the post reaction period, the heat was turned off, and an ethylene/acrylic acid copolymer (EAA) containing 20 percent acrylic acid by weight and having a melt index of 1300 (363 g, 1.01 acid equivalents) was charged with strong stirring. The temperature was allowed to drop to approximately 147° C. Eleven minutes after the start of the EAA polymer addition, the product was drained onto aluminum foil and flaked when cool. After mixing the advanced epoxy resin with the EAA copolymer, the mixture had an epoxide equivalent weight of 564 (7.62 percent epoxide). The theoretical percent epoxide of the mixture assuming no reaction between the advanced epoxy resin and the acid contained in the copolymer was 7.62. Essentially zero percent of the carboxyl groups contained in the copolymer had been reacted with the epoxy resin.

B. Preparation of Powder Coating

Employing the Procedure of Example 1-A above, the following components were blended.

| | |
|---|---|
| 646.2 g | (64.62 weight percent) epoxy resin-EAA blend from A above; |
| 25.9 g | (2.59 weight percent) of EPONTMP-108 accelerated dicyandiamide type hardener available from Shell Chemical Co.; |
| 8.0 g | (0.8 weight percent) of ACRYLONTMMFP polyacrylate type flow modifier available from Synthron, Inc.; |
| 3000.0 g | (30 weight percent) $CaCO_3$ filler; |
| 20.0 g | (2.0 weight percent) carbon black pigment. |

The resultant coating had a 60° gloss value of 2 percent reflectance as determined by ASTM D 523-85.

Example 5 Solid Epoxy Resin Plus 12 Weight Percent Copolymer; 0 Percent Conversion of the Carboxyl Groups of the Copolymer by the Epoxy Resin.

A. Preparation of Solid Advanced Epoxy Resin and Blending with Ethylene/Acrylic Acid Copolymer

A diglycidyl ether of bisphenol A having an EEW of 181 (1000 g, 5.52 epoxide equivalents) and bisphenol A (330.0 g, 2.89 phenolic hydroxyl equivalents) were pre-weighed into a two-liter, 5-neck, round bottom glass reaction flask equipped with a thermometer, Thermowatch temperature controller, stainless steel stirrer, nitrogen purge, heating mantle, and air blower. At a temperature of 84° C, when the bisphenol A was uniformly mixed in, ethyltriphenylphosphonium acetate•acetic acid complex) catalyst (1.0 g of a 70 percent solution in methanol) was charged. The heater control was then set such that the heat-up rate was 1.2° C/minute before the exotherm occurred (i.e., in the range between 95-120° C). The heat was turned off when the temperature reached 150° C, and the reaction was allowed to exotherm to a maximum temperature of 194° C. Following the advancement reaction, the temperature was allowed to drop to 173° C during an 84-minute post reaction cook. Following the post reaction period, the heat was turned off, and an ethylene/acrylic acid copolymer (EAA) containing 20 percent acrylic acid by weight and having a melt index of 2600 (181.5 g, 0.50 mole of acid) was charged with strong stirring. The temperature was allowed to drop to approximately 153° C. Eight minutes after the start of the EAA polymer addition, the product was drained onto aluminum foil and flaked when cool. After mixing the advanced epoxy resin with the EAA copolymer, the mixture had an epoxide equivalent weight of 573 (7.50 percent epoxide). The theoretical percent epoxide of the mixture assuming no reaction between the advanced epoxy resin and the acid contained in the copolymer is 748. Essentially zero percent of the carboxyl groups contained in the copolymer had been reacted with the epoxy resin.

B. Preparation of Powder Coating

Employing the Procedure of Example 1-A above, the following components were blended.

| | |
|---|---|
| 646.2 g | (64.62 weight percent) epoxy resin-EAA blend from A above; |
| 25.9 g | (2.59 weight percent) of EPONTMP-108 accelerated dicyandiamide type hardener available from Shell Chemical Co.; |
| 8.0 g | (0.8 weight percent) of ACRYLONTMMFP polyacrylate type flow modifier available from Synthron, Inc.; |
| 300.0 g | (30 weight percent) $CaCO_3$ filler; |
| 20.0 g | (2.0 weight percent) carbon black pigment. |

The resultant coating had a 60° gloss value of 3 percent reflectance as determined by ASTM D 523-85.

Example 6 Solid Epoxy Resin Plus 12 Weight Percent Copolymer; 52 percent Conversion of the Carboxyl Groups of the Copolymer by the Epoxy Resin.

A. Preparation of Blend of Solid Epoxy Resin with Ethylene/Acrylic Acid Copolymer

A solid diglycidyl ether of bisphenol A having an EEW of 587 (4400 g, 7.50 epoxide equivalents) and an ethylene/acrylic acid copolymer (EAA) containing 20 percent acrylic acid by weight polymer and having a melt index of 1300 (600 g, 1.67 equivalents of acid) were mixed by stirring and shaking in a plastic bag. The mixture was hand fed to a Werner & Pfleiderer ZSK-30 twin screw extruder. Typical zone temperatures during the compounding were 41° C, zone 1 (the feed zone; 100° C, zone 2; 94° C, zone 3; 61° C, zone 4; 64° C, zone 5; and 64° C, zone 6. The screw speed was 150 rpm, and the feed rate was 118 g/min. The product was collected in a single cake, which was allowed to cool and then broken up with a hammer. The

resultant blend had a percent epoxide of 5.7. The theoretical percent epoxide of the mixture assuming no reaction between the advanced epoxy resin and the acid contained in the copolymer is 6.45. About 52 percent of the carboxyl groups contained in the copolymer had been reacted with the epoxy resin.

B. Preparation of Powder Coating

Employing the Procedure of Example 1-A above, the following components were blended.

| | |
|---|---|
| 761.5 g | (76.15 weight percent) epoxy resin-EAA blend from A above; |
| 30.05 g | (3.05 weight percent) of EPONTMP-108 accelerated dicyandiamide type hardener available from Shell Chemical Co.; |
| 8.0 g | (0.8 weight percent) of ACRYLONTMMFP polyacrylate type flow modifier available from Synthron, Inc.; |
| 200.0 g | (20 weight percent) $TiO_2$ filler. |

The resultant coating had a 60° gloss value of 12 percent reflectance as determined by ASTM D 523-85.

Example 7 Solid Epoxy Resin Plus 8 Weight Percent Copolymer; 55 Percent Conversion of the Carboxyl Groups of the Copolymer by the Epoxy Resin.

A. Preparation of Blend of Solid Epoxy Resin with Ethylene/Acrylic Acid Copolymer

A solid diglycidyl ether of bisphenol A having an EEW of 587 (2760 g, 4.70 epoxide equivalents) and an ethylene/acrylic acid copolymer (EAA) containing 20 percent acrylic acid by weight and having a melt index of 1300 (240 g, 0.67 equivalent of acid) were mixed by stirring and shaking in a plastic bag. The mixture was hand fed to a Werner & Pfleiderer ZSK-30 twin screw extruder. Typical zone temperatures during the compounding were 41°C, zone 1 (the feed zone); 98°C, zone 2; 92°C, zone 3; 62°C, zone 4; 62°C, zone 5; and 61°C, zone 6. The screw speed was 150 rpm, and the feed rate was 128 g/min. The product was collected in a single cake, which was allowed to cool and then broken up with a hammer. The resultant blend had a percent epoxide of 6.21. The theoretical percent epoxide of the mixture assuming no reaction between the advanced epoxy resin and the acid contained in the copolymer is 6.74. About 55 percent of the carboxyl groups contained in the copolymer had been reacted with the epoxy resin.

B. Preparation of Powder Coating

Employing the Procedure of Example 1-A above, the following components were blended.

| | |
|---|---|
| 761.5 g | (76.15 weight percent) epoxy resin-EAA blend from A above; |
| 30.05 g | (3.05 weight percent) of EPONTMP-108 accelerated dicyandiamide type hardener available from Shell Chemical Co.; |
| 8.0 g | (0.8 weight percent) of ACRYLONTMMFP polyacrylate type flow modifier available from Synthron, Inc.; |
| 200.0 g | (20 weight percent) $TiO_2$ filler. |

The resultant coating had a 60° gloss value of 11 percent reflectance as determined by ASTM D 523-85.

Example 8 Solid Epoxy Resin Plus 8 Weight Percent Copolymer; 1 Percent Conversion of the Carboxyl Groups of the Copolymer by the Epoxy Resin.

A. Preparation of Blend of Solid Epoxy Resin with Ethylene/Acrylic Acid Copolymer

A solid diglycidyl ether of bisphenol A having an EEW of 691 (4600 g, 6.66 epoxide equivalents) and an ethylene/acrylic acid copolymer (EAA) containing 20 percent acrylic acid by weight and having a melt index of 1300 (400 g, 1.11 equivalents of acid) were mixed by stirring and shaking in a plastic bag. The mixture was hand fed to a Werner & Pfleiderer ZSK-30 twin screw extruder. The resultant blend had a percent epoxide of 5.71. The theoretical percent epoxide of the mixture assuming no reaction between the advanced epoxy resin and the acid contained in the copolymer is 5.73. About 1 percent of the carboxyl groups contained in the copolymer had been reacted with the epoxy resin.

B. Preparation of Powder Coating

Employing the Procedure of Example 1-A above, the following components were blended.

| | |
|---|---|
| 761.5 g | (76.15 weight percent) epoxy resin-EAA blend from A above; |
| 30.05 g | (3.05 weight percent) of EPONTMP-108 accelerated dicyandiamide type hardener available from Shell Chemical Co.; |
| 8.0 g | (0.8 weight percent) of ACRYLONTMMFP polyacrylate type flow modifier available from Synthron, Inc.; |
| 200.0 g | (20 weight percent) $TiO_2$ filler. |

The resultant coating had a 60° gloss value of 24 percent reflectance as determined by ASTM D 523-85.

Example 9 Solid Epoxy Resin Plus 12 Weight Percent Copolymer; 2 Percent Conversion of the Carboxyl Groups of the Copolymer by the Epoxy Resin.

A. Preparation of Blend of Solid Epoxy Resin with Ethylene/Acrylic Acid Copolymer

A solid diglycidyl ether of bisphenol A having an EEW of 691 (2640 g, 3.82 epoxide equivalents) and an ethylene/acrylic acid copolymer (EAA) containing 20 percent acrylic acid by weight and having a melt index of 1300 (360 g, 1.00 acid equivalent) were mixed by stirring and shaking in a plastic bag. The mixture was hand fed to a Werner & Pfleiderer ZSK-30 twin screw extruder. Typical zone temperatures during the compounding were 47° C, zone 1 (the feed zone); 96° C, zone 2; 91° C, zone 3; 63° C, zone 4; 63° C, zone 5; and 74° C, zone 6. The screw speed was 150 rpm, and the feed rate was 109 g/min. The product was collected in a single cake, which was allowed to cool and then broken up with a hammer. The resultant blend had a percent epoxide of 5.45. The theoretical percent epoxide of the mixture assuming no reaction between the advanced epoxy resin and the acid contained in the copolymer is 5.48. About 2 percent of the carboxyl groups contained in the copolymer had been reacted with the epoxy resin.

B. Preparation of Powder Coating

Employing the Procedure of Example 1-A above, the following components were blended.

| | |
|---|---|
| 761.5 g | (76.15 weight percent) epoxy resin-EAA blend from A above; |
| 30.05 g | (3.05 weight percent) of EPONTMP-108 accelerated dicyandiamide type hardener available from Shell Chemical Co.; |
| 8.0 g | (0.8 weight percent) of ACRYLONTMMFP polyacrylate type flow modifier available from Synthron, Inc.; |
| 200.0 g | (20 weight percent) $TiO_2$ filler. |

The resultant coating had a 60° gloss value of 16 percent reflectance as determined by ASTM D 523-85.

Example 10 Solid Epoxy Resin Plus 8 Weight Percent Copolymer; 0 Percent Conversion of the Carboxyl Groups of the Copolymer by the Epoxy Resin.

A. Preparation of Blend of Solid Epoxy Resin With Ethylene/Acrylic Acid Copolymer

A solid diglycidyl ether of bisphenol A having an EEW of 640 (9200 g, 14.38 epoxide equivalents) and an ethylene/acrylic acid copolymer (EAA) containing 20 percent acrylic acid by weight and having a melt index of 1300 (800 g, 2.22 acid equivalents) were mixed by stirring and shaking in a plastic bag. The mixture was hand fed twice through a Buss Condux PLK-46 single screw extruder. Typical zone temperatures during the compounding were 80° C for zone 1 (the feed zone) and 50° C for zone 2. The screw speed was 200 rpm. The feed rate was approximately 500 g/min. for each pass through the extruder. The molten extrudate was passed through BCI Chill Rolls, 6 1/2 inch (165.1 mm) diameter, cooled and crushed. The product following the first pass through the extruder was not a uniform blend: unmixed particles of the EAA polymer were seen. The product following the second pass through the extruder was a uniform blend. The resultant blend had a percent epoxide of 6.18. The theoretical percent epoxide of the mixture assuming no reaction between the advanced epoxy resin and the acid contained in the copolymer was 6.18. Essentially zero percent of the carboxyl groups contained in the copolymer had been reacted with the epoxy resin.

B. Preparation of Powder Coating

Employing the Procedure of Example 1-A above, the following components were blended.

| | |
|---|---|
| 950 g | (76.13 weight percent) epoxy resin-EAA blend from A above; |
| 38 g | (3.04 weight percent) of EPONTMP-108 accelerated dicyandiamide type hardener available from Shell Chemical Co.; |
| 10 g | (0.8 weight percent) of ACRYLONTMMFP polyacrylate type flow modifier available from Synthron, Inc.; |
| 250 g | (20.03 weight percent) $TiO_2$ filler. |

The resultant coating had a 60° gloss value of 18 percent reflectance as determined by ASTM D 523-85.

Example 11 Solid Epoxy Resin Plus 8 Weight Percent Copolymer; 2 Percent Conversion of the Carboxyl Groups of the Copolymer by the Epoxy Resin.

A. Preparation of Blend of Solid Epoxy Resin With Ethylene/Acrylic Acid Copolymer

A solid diglycidyl ether of bisphenol A having and EEW of 630 (2000 g, 31.8 epoxide equivalents) and an ethylene/acrylic acid copolymer (EAA) containing 20 percent acrylic acid by weight and having a melt index of 1300 (1740 g, 4.83 carboxyl equivalent) were mixed by stirring and shaking in a plastic bag. The mixture was hand fed twice through a Buss Condux PLK-46 single screw extruder. Typical zone temperatures during the compounding are 70° C for zone 1 (the feed zone) and 50° C for zone 2 for the first pass, and 50° C for zone 1 and 35° C for zone 2 for the second pass. The screw speed was 200 rpm. The feed rate was approximately 500 g/min. for each pass through the extruder. The molten extrudate was passed through BCI Chill Rolls, 6 1/2 inch (165.1 mm) diameter, cooled and crushed. The product following the first pass through the extruder was not a uniform blend: unmixed particles of the EAA polymer were seen. The product following the second pass through the extruder was a uniform blend. The resultant blend had a percent epoxide of 6.26. The theoretical percent epoxide of the mixture assuming no reaction between the advanced epoxy resin and the acid contained in the copolymer is 6.28. About 2 percent of the carboxyl groups contained in the copolymer had been reacted with the epoxy resin.

B. Preparation of Powder Coating

Employing the Procedure of Example 1-A above, the following components were blended.

| | |
|---|---|
| 1500 g | (92.9 weight percent) epoxy resin-EAA blend from A above; |
| 60 g | (3.72 weight percent) of EPONTMP-108 accelerated dicyandiamide type hardener available from Shell Chemical Co.; |
| 24 g | (1.49 weight percent) of ACRYLONTMMFP polyacrylate type flow modifier available from Synthron, Inc.; |
| 30 g | (1.68 weight percent) carbon black pigment. |

The resultant coating had a 60° gloss value of 9 percent reflectance as determined by ASTM D 523-85.

Example 12 Solid Epoxy Resin Plus 16 Weight Percent Copolymer; 6 Percent Conversion of the Carboxyl Groups of the Copolymer by the Epoxy Resin.

A. Preparation of Blend of Solid Epoxy Resin with Ethylene/Acrylic Acid Copolymer

A solid diglycidyl ether of bisphenol A having an EEW of 640 (2520 g, 3.94 epoxide equivalents) and an ethylene/acrylic acid copolymer (EAA) containing 20 percent acrylic acid by weight and having a melt index of 1300 (480 g, 1.33 carboxyl equivalents) are mixed by stirring and shaking in a plastic bag. The mixture was hand fed twice through a Buss Condux PLK-46 single screw extruder. Typical zone temperatures during the compounding are 70° C for zone 1 (the feed zone) and 50° C for zone 2 for the first pass, and 70° C for zone 1 and 35° C for zone 2 for the second pass. The screw speed was 200 rpm. The feed rate was approximately 500 g/min. for each pass through the extruder. The molten extrudate was passed through BCI Chill Rolls 6 1/2 inch (165.1 mm) diameter, cooled and crushed. The product following the first pass through the extruder was not a uniform blend: unmixed particles of the EAA polymer were seen. The product following the second pass through the extruder was a uniform blend. The resultant blend had a percent epoxide of 5.52. The theoretical percent epoxide of the mixture assuming no reaction between the advanced epoxy resin and the acid contained in the copolymer is 5.64. About 6 percent of the carboxyl groups contained in the copolymer had been reacted with the epoxy resin.

B. Preparation of Powder Coating

Employing the Procedure of Example 1-A above, the following components were blended.

| | |
|---|---|
| 950 g | (76.12 weight percent) epoxy resin-EAA blend from A above; |
| 40 g | (3.04 weight percent) of EPONTMP-108 accelerated dicyandiamide type hardener available from Shell Chemical Co.; |
| 10 g | (0.80 weight percent) of ACRYLONTMMFP polyacrylate type flow modifier available from Synthron, Inc.; |
| 250 g | (20.03 weight percent) $TiO_2$ filler. |

The resultant coating had a 60° gloss value of 12 percent reflectance as determined by ASTM D 523-85.

Example 13 Solid Epoxy Resin Plus 16 Weight Percent Copolymer; 6 Percent Conversion of the Carboxyl Groups of the Copolymer by the Epoxy Resin.

A. Preparation of Blend of Solid Epoxy Resin with Ethylene/Acrylic Acid Copolymer

A solid diglycidyl ether of bisphenol A having an EEW of 530 (6720, 12.68 epoxide equivalents) and an ethylene/acrylic acid copolymer (EAA) containing 20 percent acrylic acid by weight and having a melt index of 1300 (1280 g, 3.57 carboxyl equivalents) were mixed by stirring and shaking in a plastic bag. The mixture was hand fed to a Buss Condux PLK-46 single screw extruder. Typical zone temperatures during the compounding are 70° C, zone 1 (the feed zone), and 50° C, zone 2 for the first pass; 50° C, 1st zone and 70° C, 2nd zone for the second pass. The screw speed was 100 rpm, and the feed rate was 73 g/min. The molten extrudate was passed through BCI Chill Rolls 6 1/2 inch (165.1 mm) diameter, cooled and crushed. The resultant blend had a percent epoxide of 6.69. The theoretical percent epoxide of the mixture assuming no reaction between the advanced epoxy resin and the acid contained in the copolymer is 6.81. About 6 percent of the carboxyl groups contained in the copolymer had been reacted with the epoxy resin.

B. Preparation of Powder Coating

Employing the Procedure of Example 1-A above, the following components were blended.

| | |
|---|---|
| 1500 g | (92.9 weight percent) epoxy resin-EAA blend from A above; |
| 60 g | (3.72 weight percent) of EPONTMP-108 accelerated dicyandiamide type hardener available from Shell Chemical Co.; |
| 24 g | (1.49 weight percent) of ACRYLONTMMFP polyacrylate type flow modifier available from Synthron, Inc.; |
| 30 g | (1.86 weight percent) carbon black pigment. |

The resultant coating had a 60° gloss value of 5 percent reflectance as determined by ASTM D 523-85.

Example 14 Solid Epoxy Resin Plus 8 Weight Percent Copolymer; 19 Percent Conversion of the Carboxyl Groups of the Copolymer by the Epoxy Resin.

A solid epoxy resin having an EEW of 532 (45,400 gms, 85.3 epoxy equivalents) which was the reaction product of (a) a diglycidyl ether of bisphenol A having an EEW of 180, (b) a phenol-formaldehyde epoxy novolac having an EEW of 179 and an average functionality of 3.6, and (c) bisphenol A in an equivalent ratio of 55:26:19, respectively and an ethylene/acrylic acid copolymer (EAA) containing 20 percent acrylic acid by weight and having a melt index of 1300 (3948 g, 11.0 carboxyl equivalents) were mixed by stirring

and shaking in a plastic bag. The mixture was fed twice through a Buss Condux PLK-46 single screw extruder. Typical zone temperatures during the compounding were 70 °C for zone 1 (the feed zone) and 35 °C for zone 2. The screw speed was 200 rpm. The mixture was fed via a feed hopper speed at 31 rpm, resulting in a feed rate which was approximately 500 g/min. for each pass through the extruder. The molten extrudate was passed through BCI Chill Rolls, 6 1/2 inch (165.1 mm) diameter, cooled and crushed. The product following the first pass through the extruder was not a uniform blend: unmixed particles of the EAA polymer were seen. The product following the second pass through the extruder was a uniform blend. The resultant blend had a percent epoxide of 6.69. The theoretical percent epoxide of the mixture assuming no reaction between the advanced epoxy resin and the acid contained in the copolymer is 6.81. About 19 percent of the carboxyl groups contained in the copolymer had been reacted with the epoxy resin.

B. Preparation of Powder Coating

Employing the Procedure of Example 1-A above, the following components were blended.

| | |
|---|---|
| 1000 g | A(93.63 weight percent) epoxy resin-EAA blend from A above; |
| 40 g | (3.75 weight percent) of EPONTMP-108 accelerated dicyandiamide type hardener available from Shell Chemical Co.; |
| 8 g | (0.75 weight percent) of ACRYLONTMMFP polyacrylate type flow modifier available from Synthron, Inc.; |
| 20 g | (1.87 weight percent) carbon black pigment. |

The resultant coating had a 60° gloss value of 11 percent reflectance as determined by ASTM D 523-85.

The results of the examples and comparative experiments are summarized in the following Table I.

TABLE I

SUMMARY OF RESULTS

| EXAMPLE OR COMP. EXPT. | COATING THICKNESS | | | | % REFLECTANCE | | | IMPACT | |
|---|---|---|---|---|---|---|---|---|---|
| | MEAN | MIN. | MAX. | % VAR. | 20 ANGLE | 60 ANGLE | 85 ANGLE | FOR. IN-LB | REV. IN-LB |
| 1 | --- | 3.2 | 3.3 | --- | 0.5 | 8 | --- | --- | --- |
| A* | --- | 1.7 | 2.2 | --- | 39.0 | 77 | --- | --- | --- |
| 2 | --- | 2.2 | 2.5 | --- | 8.0 | 43 | --- | --- | --- |
| 3 | 3.2 | 2.5 | 3.7 | 11 | 1.4 | 6 | 13 | 160 | 160 |
| 4 | 2.4 | 2.0 | 3.1 | 12 | 0.0 | 1.7 | 9 | 150 | 60 |
| 5 | 2.2 | 1.6 | 2.7 | 14 | 0.1 | 3.0 | 11 | --- | --- |
| 6 | 2.5 | 2.3 | 2.8 | 7 | 2.0 | 12 | --- | 160 | 160 |

*Not an example of the present invention.

TABLE I (CONTINUED)

SUMMARY OF RESULTS

| EXAMPLE OR COMP. EXPT. | COATING THICKNESS | | | | % REFLECTANCE | | | IMPACT | |
|---|---|---|---|---|---|---|---|---|---|
| | MEAN | MIN. | MAX. | % VAR. | 20 ANGLE | 60 ANGLE | 85 ANGLE | FOR. IN-LB | REV. IN-LB |
| 7 | 2.3 | 2.1 | 2.5 | 7 | 1.9 | 11 | --- | 130 | 130 |
| 8 | 2.5 | 2.2 | 2.7 | 7 | 3.4 | 24 | --- | 160 | 160 |
| 9 | 2.0 | 1.7 | 2.4 | 10 | 2.4 | 16 | --- | 160 | 160 |
| 10 | 3.3 | 3.0 | 3.6 | 6 | 2.5 | 18 | 30 | 140 | 160 |
| 11 | 1.9 | 1.5 | 2.2 | 13 | 0.6 | 9 | 23 | 160 | 160 |
| 12 | 1.9 | 1.6 | 2.2 | 11 | 1.2 | 7 | 12 | 160 | 160 |
| 13 | 3.2 | 2.6 | 3.7 | 11 | .06 | 5 | 23 | 160 | 160 |
| 14 | --- | 1.8 | 2.2 | --- | 0.9 | 11 | --- | --- | --- |

*Not an example of the present invention.

## Claims

1. A composition consisting essentially of a homogeneous mixture of (A) one or more epoxy resins having an average of more than one vicinal epoxy group per molecule and (B) one or more polymers resulting from polymerizing (1) one or more α-olefins, (2) one or more polymerizable ethylenically unsaturated acids and (3) one or more polymerizable ethylenically unsaturated monomers other than (1) or (2); wherein components (A) and (B) are present in an amount which provides from 50 to 95 percent by weight of component (A) and from 50 to 5 percent by weight of component (B); component (B-1) is present

in an amount of from 65 to 95 percent by weight of the combined weight of components (B-1), (B-2) and (B-3); component (B-2) is present in an amount of from 5 to 35 percent by weight of the combined weight of components (B-1), (B-2) and (B-3); and component (B-3) is present in an amount of from zero to 10 percent by weight of the combined weight of components (B-1), (B-2) and (B-3) and wherein not more than 55 percent of the carboxyl groups contained in component (B) has been reacted with component (A).

2. A composition of Claim 1 wherein

(a) components (A) and (B) are present in an amount which provides from 84 to 92 percent by weight of component (A) and from 16 to 8 percent by weight of component (B);

(b) component (B-1) is present in an amount of from 65 to 85 percent by weight of the combined weight of components (B-1), (B-2) and (B-3);

(c) component (B-2) is present in an amount of from 15 to 35 percent by weight of the combined weight of components (B-1), (B-2) and (B-3); and

(d) component (B-3) is present in an amount of from zero to 5 percent by weight of the combined weight of components (B-1), (B-2) and (B-3).

3. A composition of Claim 1 wherein

(a) component (B-1) is present in an amount of from 75 to 80 percent by weight of the combined weight of components (B-1), (B-2) and (B-3);

(b) component (B-2) is present in an amount of from 20 to 25 percent by weight of the combined weight of components (B-1), (B-2) and (B-3); and

(c) component (B-3) is present in an amount of from zero to 2 percent by weight of the combined weight of components (B-1), (B-2) and (B-3).

4. A composition of Claim 1 wherein

(a) component (A) is an aromatic based epoxy resin;

(b) component (B-1) is an α-olefin having from 2 to 18 carbon atoms, or a combination of any two or more of such α-olefins

(c) component (B-2) is a polymerizable ethylenically unsaturated monocarboxylic acid having from 3 to 4 carbon atoms; and

(d) component (B-3), when present, is a polymerizable alkyl, cycloalkyl and aromatic esters of ethylenically unsaturated monocarboxylic acid, aromatic substituted alkene, halo or alkyl substituted aromatic substituted alkene or any combination of any two or more such monomers.

5. A composition of Claim 1 wherein

(a) component (A) is an epoxy resin represented by the following general formula IV

FORMULA IV

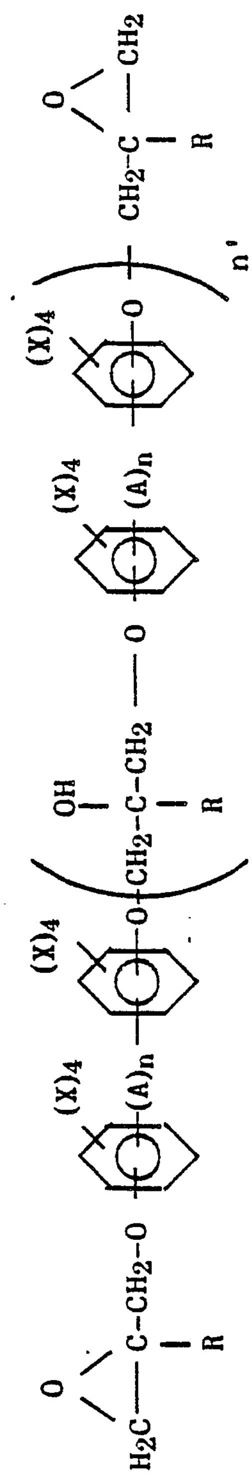

wherein each A is independently a divalent hydrocarbyl group having from 1 to 12 carbon atoms; each R is independently hydrogen or an alkyl group having from 1 to 3 carbon atoms; each X is independently hydrogen, a hydrocarbyl or hydrocarbyloxy group having suitably from 1 to 12 carbon atoms or a halogen atom; each n independently has a value of zero or 1; and n′ has an average value from 2 to 6;

(b) component (B-1) is ethylene or a mixture of ethylene and any one or more of propylene, butene-1, hexene-1 or octene-1;

(c) component (B-2) is a polymerizable ethylenically unsaturated monocarboxylic acid having from 3 to 4 carbon atoms or a combination of any two or more of such acids; and

(d) component (B-3), when present, is a polymerizable $C_1$ to $C_8$ alkyl ester of a monocarboxylic acid having from 3 to 4 carbon atoms, styrene, or a combination of any two or more of such monomers.

6. A composition of Claim 1 wherein

(a) component (A) is a diglycidyl ether of (i) bisphenol A, (ii) bisphenol F, (iii) bisphenol K or (iv) a combination of any two or more of such glycidyl ethers;

(b) component (B-1) is ethylene;

(c) component (B-2) is acrylic acid or methacrylic acid or a combination thereof; and

(d) component (B-3), when present, is styrene, vinyl toluene, a $C_1$-$C_8$ alkyl ester of acrylic or methacrylic acid, or any combination thereof.

7. A composition of Claim 2 wherein

(a) component (A) is an aromatic based epoxy resin;

(b) component (B-1) is an $\alpha$-olefin having from 2 to 18 carbon atoms, or a combination of any two or more of such $\alpha$-olefins

(c) component (B-2) is a polymerizable ethylenically unsaturated monocarboxylic acid having from 3 to 4 carbon atoms; and

(d) component (B-3), when present, is a polymerizable alkyl, cycloalkyl and aromatic esters of ethylenically unsaturated monocarboxylic acid, aromatic substituted alkene, halo or alkyl substituted aromatic substituted alkene or any combination of any two or more such monomers.

8. A composition of Claim 2 wherein

(a) component (A) is an epoxy resin represented by the following general formula IV

FORMULA IV

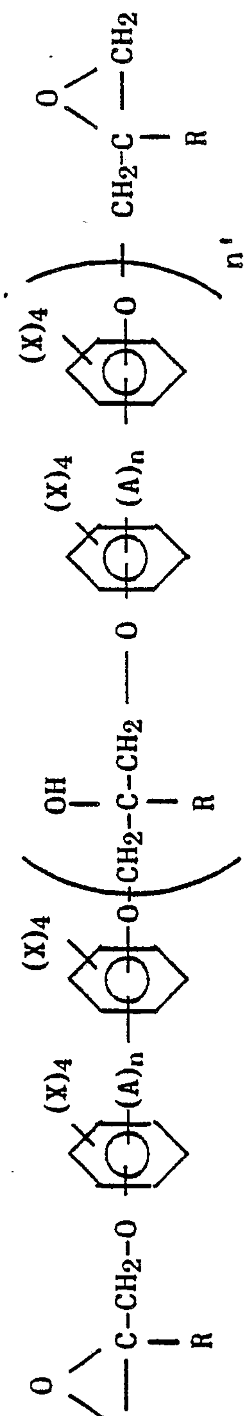

wherein each A is independently a divalent hydrocarbyl group having from 1 to 12 carbon atoms; each R is independently hydrogen or an alkyl group having from 1 to 3 carbon atoms; each X is independently hydrogen, a hydrocarbyl or hydrocarbyloxy group having suitably from 1 to 12 carbon atoms or a halogen atom; each n independently has a value of zero or 1; and $n'$ has an average value from 2 to 6;

(b) component (B-1) is ethylene or a mixture of ethylene and any one or more of propylene, butene-1, hexene-1 or octene-1;

(c) component (B-2) is a polymerizable ethylenically unsaturated monocarboxylic acid having from 3 to 4 carbon atoms or a combination of any two or more of such acids; and

(d) component (B-3), when present, is a polymerizable $C_1$ to $C_8$ alkyl ester of a monocarboxylic acid having from 3 to 4 carbon atoms, styrene, or a combination of any two or more of such monomers.

9. A composition of Claim 2 wherein

(a) component (A) is a diglycidyl ether of (i) bisphenol A, (ii) bisphenol F, (iii) bisphenol K or (iv) a combination of any two or more of such glycidyl ethers;

(b) component (B-1) is ethylene;

(c) component (B-2) is acrylic acid or methacrylic acid or a combination thereof; and

(d) component (B-3), when present, is styrene, vinyl toluene, a $C_1$-$C_8$ alkyl ester of acrylic or methacrylic acid, or any combination thereof.

10. A composition of Claim 3 wherein

(a) component (A) is an aromatic based epoxy resin;

(b) component (B-1) is an α-olefin having from 2 to 18 carbon atoms, or a combination of any two or more of such α-olefins

(c) component (B-2) is a polymerizable ethylenically unsaturated monocarboxylic acid having from 3 to 4 carbon atoms; and

(d) component (B-3), when present, is a polymerizable alkyl, cycloalkyl and aromatic esters of ethylenically unsaturated monocarboxylic acid, aromatic substituted alkene, halo or alkyl substituted aromatic substituted alkene or any combination of any two or more such monomers.

11. A composition of Claim 3 wherein

(a) component (A) is an epoxy resin represented by the following general formula IV

FORMULA IV

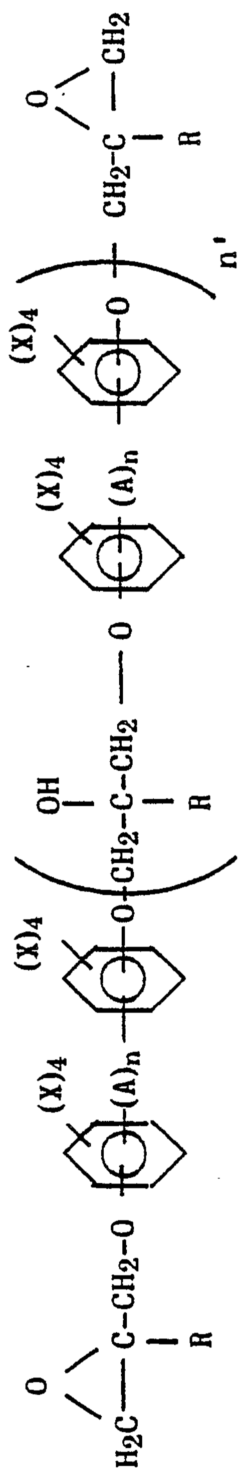

wherein each A is independently a divalent hydrocarbyl group having from 1 to 12 carbon atoms; each R is independently hydrogen or an alkyl group having from 1 to 3 carbon atoms; each X is independently hydrogen, a hydrocarbyl or hydrocarbyloxy group having suitably from 1 to 12 carbon atoms or a halogen atom; each n independently has a value of zero or 1; and n′ has an average value from 2 to 6;

(b) component (B-1) is ethylene or a mixture of ethylene and any one or more of propylene, butene-1, hexene-1 ór octene-1;

(c) component (B-2) is a polymerizable ethylenically unsaturated monocarboxylic acid having from 3 to 4 carbon atoms or a combination of any two or more of such acids; and

(d) component (B-3), when present, is a polymerizable $C_1$ to $C_8$ alkyl ester of a monocarboxylic acid having from 3 to 4 carbon atoms, styrene, or a combination of any two or more of such monomers.

12. A composition of Claim 3 wherein

(a) component (A) is a diglycidyl ether of (i) bisphenol A, (ii) bisphenol F, (iii) bisphenol K or (iv) a combination of any two or more of such glycidyl ethers;

(b) component (B-1) is ethylene;

(c) component (B-2) is acrylic acid or methacrylic acid or a combination thereof; and

(d) component (B-3), when present, is styrene, vinyl toluene, a $C_1$-$C_8$ alkyl ester of acrylic or methacrylic acid, or any combination thereof.

13. A process for preparing a homogeneous mixture of an epoxy and a carbonyl containing olefin polymer comprising contacting at a temerature and a time such that the mixture does not result in a substantial drop in epoxide content (A) one or more epoxy resins having an average of more than one vicinal epoxy group per molecule and (B) one or more polymers resulting from polymerizing (1) one or more α-olefins, (2) one or more polymerizable ethylenically unsaturated acids and (3) one or more polymerizable ethylenically unsaturated monomers other than (1) or (2); wherein components (A) and (B) are present in an amount which provides from 50 to 95 percent by weight of component (A) and from 50 to 5 percent by weight of component (B); component (B-1) is present in an amount of from 65 to 95 percent by weight of the combined weight of components (B-1), (B-2) and (B-3); component (B-2) is present in an amount of from 5 to 35 percent by weight of the combined weight of components (B-1), (B-2) and (B-3); and component (B-3) is present in an amount of from zero to 10 percent by weight of the combined weight of components (B-1), (B-2) and (B-3) and wherein not more than 55 percent of the carboxyl groups contained in component (B) has been reacted with component (A).

14. The process of Claim 14 wherein the temperature is from 50°C to 150°C and the time is from 0.1 minute to 10 minutes.